(19) Europäisches Patentamt
European Patent Office
Office européen des brevets

(11) **EP 3 543 918 A1**

(12) **EUROPEAN PATENT APPLICATION**

(43) Date of publication:
**25.09.2019 Bulletin 2019/39**

(51) Int Cl.:
**G06N 3/08** *(2006.01)*     **G06N 5/04** *(2006.01)*
**G06N 3/04** *(2006.01)*

(21) Application number: **18162901.5**

(22) Date of filing: **20.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Flink AI GmbH**
**8542 Wiesendangen (CH)**

(72) Inventor: **Egloff, Daniel**
**8542 Wiesendangen (CH)**

(74) Representative: **Rutz, Andrea**
**Isler & Pedrazzini AG**
**Giesshübelstrasse 45**
**Postfach 1772**
**8027 Zürich (CH)**

(54) **REINFORCEMENT LEARNING METHOD**

(57)     A reinforcement learning method is provided for training a policy (8) to perform recommendations and/or sequential decisions by learning from a data stream (1). For each subsequence (2) of the data stream (1), an initial state approximation (7) is determined by querying a memory (4). A partial rollout is then generated comprising a triple of state (7; 11), action (9; 12) and reward for each element (3) of the subsequence (2). For this purpose, an adaptive policy (8) is iteratively applied to generate an action (9; 12) leading to a next state (11) and a reward. A representation of each obtained tuple of action (9; 12) and next state (11) is stored in the memory (4), in order to improve further initial state approximations (7). The memory is a differential memory (4) having a write-function $f_{\text{write}}$ (6) and/or a read-function $f_{read}$ (5) different from the identity function.

FIG. 1

**Description**

TECHNICAL FIELD

The present invention concerns a reinforcement learning method for making recommendations and/or sequential decisions on the basis of an input data stream, a method for regularizing and processing an event-based data stream as well as a computer program product for performing the steps of one of these methods.

PRIOR ART

Autonomous decision making is a core topic in modern artificial intelligence. It involves the particular challenge to design a hardware- and/or software-based agent in such a way that it can learn complex relationships, in order to make recommendations or decisions for carrying out certain tasks. For this purpose, the agent should be adaptive with respect to the problem and its solution and, thus, not every step should be pre-programmed.

In this context, reinforcement learning provides a solid framework to approach the challenge of autonomous decision making by means of experience-driven autonomous learning. It can basically be regarded as a fusion of two research streams. The first is optimal control theory, initiated by L. Pontryagin and R. Bellman in 1950s, which provides the mathematical method for deriving control policies. The second is behaviorism, which systematically explains the behavior of humans and animals with reflexes as a response to stimuli in the environment or as consequence of the individual's experience and history.

Within the reinforcement learning framework, hardware- and/or software-based agents learn by interacting with an environment in a sequential manner. The agents observe the state of the environment, based on which they decide to take an action from an allowed set of possible actions. The action results in a reward for the agents and puts the environment in a new state. The overall goal of the agents is to learn a policy which maps the states which they observe to actions, with the goal to maximize their cumulative long-term reward. A sequence of interactions with the environment results in a sequence of environment states, agent actions and rewards and is called an episode. Many variations of this framework of reinforcement learning exist and are described for example in the publications "Richard S Sutton and Andrew G Barto. Reinforcement learning: An introduction, volume 1. MIT press Cambridge, 1998" and in "Dimitri P. Bertsekas. Dynamic Programming & Optimal Control, Vol I (Third edition). 2005. ISBN 9781886529267,1886529264".

Deep learning has had a significant impact on reinforcement learning, and deep reinforcement learning has emerged as a new field. Deep reinforcement learning applies deep neural networks techniques to capture structures in complex environments and to generalize policies over large state spaces. Deep neural networks have one or several intermediate layers, usually referred to as hidden layers, between an input layer and an output layer. This, together with new learning algorithms, allows to process decision-making problems with high-dimensional state and action spaces, which were previously intractable. Examples of deep neural networks are disclosed in "Volodymyr Mnih, Koray Kavukcuoglu, David Silver, Andrei A Rusu, Joel Veness, Marc G Bellemare, Alex Graves, Martin Riedmiller, Andreas K Fidjeland, Georg Ostrovski, et al. Human-level control through deep reinforcement learning. Nature, 518(7540):529-533, 2015", "David Silver, Aja Huang, Chris J Maddison, Arthur Guez, Laurent Sifre, George Van Den Driessche, Julian Schrittwieser, Ioannis Antonoglou, Veda Panneershelvam, Marc Lanctot, et al. Mastering the game of go with deep neural networks and tree search. Nature, 529(7587):484-489, 2016", "David Silver, Julian Schrittwieser, Karen Simonyan, Ioannis Antonoglou, Aja Huang, Arthur Guez, Thomas Hubert, Lucas Baker, Matthew Lai, Adrian Bolton, et al. Mastering the game of go without human knowledge. Nature, 550(7676): 354-359, 2017" and "Kai Arulkumaran, Marc Peter Deisenroth, Miles Brundage, and Anil Anthony Bharath. A brief survey of deep reinforcement learning. IEEE Signal Processing Magazine, Volume: 34, Issue: 6, pages 26-38, Nov. 2017".

As already mentioned, an episode is the sequential interaction of an agent with its environment. As such, an episode is inherently serial in nature, as a new state of the environment is revealed to the agent only after it has chosen an action. For certain industrial applications, episodes can be very long. This poses a major issue as it slows down the training time and also limits the scalability of the reinforcement learning and particularly the deep reinforcement learning. Furthermore, with reinforcement learning based on very long episodes, there is a tendency that particularly old episode parts might be forgotten in the course of the further training. The consequences of such a forgetting process are particularly severe, if the forgotten episode parts represent important, but rare events and in particular catastrophic events.

Another problem is that very long sequences of event data are hard to process efficiently with deep learning models. This is particularly the case, if e.g. an agent observes multiple time series of event data. It is then the challenge for the agent to extract the relevant event data from these time series, in order to build up a state of the environment for being used to predict certain actions. Current models based on recurrent neural networks (RNN) do not scale. Current models based on convolutional neural networks (CNN) would scale to large amounts of data, but assume regularly clocked data, hence do not apply for event-based time series data.

A reinforcement learning method in which an external memory is used for enabling a parallelization of the training process is disclosed by "Zhengyao Jiang, Dixing Xu, and Jinjun Liang. A deep reinforcement learning framework for the financial portfolio management problem. arXiv preprint arXiv:1706.10059, 2017".

SUMMARY OF THE INVENTION

It is a first object of the present invention to provide a reinforcement learning method that can be processed efficiently and avoids or at least reduces the forgetting of historical data. It is a second object of the invention to provide a method for efficiently processing an event-based data stream.

The first object is solved by a method as claimed in claim 1. Further embodiments of the method are provided in dependent claims 2 to 12. The second object is solved by a method for regularizing, encoding and processing an event-based data stream as claimed in claim 13. Claim 14 provides a computer program product for performing the steps according to one of these methods, when run on a computer.

The present invention thus provides a reinforcement learning method for training a policy to perform recommendations and/or sequential decisions by learning from an input data stream, in particular from an event-based input data stream,

wherein the method comprises the step:

a0.) partitioning the input data stream into a plurality of subsequences $p_t$ with $ni$ sequence elements and with $t = t_i, ..., t_{i+ni}$;

and wherein for each of these subsequences $p_t$, the following steps are carried out:

a.) determining an initial state approximation $s_{t_i}$ at time $t_i$ by querying a memory;
b.) generating a partial rollout comprising a triple of state, action and reward for each sequence element, starting with the initial state approximation $s_{t_i}$ and iteratively applying an adaptive policy to generate an action $a_{t_i}$, in order to reveal a next state and a reward;
c.) storing a representation of each obtained tuple of action and next state in the memory, in order to improve further initial state approximations; and
d.) using the partial rollouts to adapt the adaptive policy by means of a reinforcement learning algorithm.

The memory is a differential memory in which a write-function $f_{write}$ being different from the identity function is applied for storing and/or in which a read-function $f_{read}$ being different from the identity function is applied for querying.

By using a differential memory, it is possible to store experience data, i.e. the already generated tuples of action and next state, in such a way, that no or at least reduced forgetting in particular of important and of catastrophic events occurs. With a conventional memory having write- and read-functions in the form of the identity function, the available memory size will sooner or later be completely used, such that new experience data can only be stored by replacing old data. By using a differential memory, an improved learning can be achieved without increasing the memory size. Thus, better usage of the available memory size is achieved with the method according to the invention. Alternatively, similar results can be achieved with a reduced memory size. By choosing the write-function $f_{write}$ and/or the read-function $f_{read}$ in a smart way, a higher weight and/or a slower rate of forgetting can e.g. be given to important and particularly catastrophic events.

The partitioning of the input data stream in step a0.) can be done such that the number of sequence elements $ni$ is the same for all subsequences. In certain embodiments, however, the number of sequence elements can be varying among the subsequences. For example, the input data stream can be an event-based data stream, i.e. a data stream in which the individual data elements arrive in irregular and not predictable time intervals. In such a case of an event-based data stream, the data stream can for example be partitioned such that all subsequences cover the same time interval, but do not necessarily include the same number of sequence elements.

At the beginning of carrying out the method, an arbitrary initial value or arbitrary initial values that are pre-stored in the memory can be used for the initial state approximation in step a.).

In step b.), a triple of state, action and reward is determined for each sequence element. For this purpose, starting with the initial state approximation $s_{t_i}$, the adaptive policy is applied to generate a first action $a_{t_i}$. At the beginning of carrying out the method, the policy can be initialized with arbitrary parameters which are then continuously updated during the further application of the method. Based on the generated action $a_{t_i}$, a next state is revealed. The next state can for example be represented by the next sequence element alone, by a modification of the next sequence element by means of the action $a_{t_i}$, or by a state that arbitrarily results from the next sequence element in combination with the generated action $a_{t_i}$. Additionally, a reward is revealed based on the generated action $a_{t_i}$. The reward can particularly be dependent on the generated action $a_{t_i}$ and on the obtained next state and can for example be a direct function of the action and the next state. Based on the obtained new state, a next action can be generated by means of the policy, which again results in a further state and a respective reward. This process is iteratively continued for all sequence elements until the end of the subsequence.

The obtained tuples of action and next state is then stored in the memory in step c.), in order to improve further initial state approximations. Preferably, each tuple of action and next state is directly stored after having been generated. Thus, method steps b.) and c.) do not have to be temporally separated in the sense that method step c.) is only carried out after completion of step b.). It is, however, certainly possible in certain embodiments to store the tuples of action and next state for all sequence elements only after step. b.) is completed.

By continuously adapting the policy in step d.), a learning is achieved during a training phase, such that the policy can be used later on, i.e. after completion of the training phase, to perform recommendations and/or sequential decisions. The training can be an initial training which is carried out and completed before using the policy to perform recommendations and/or sequential decisions. It can, however, also be an online-training, where further data is continuously arriving and used to adapt the policy which at the same time is used to perform recommendations and/or sequential decisions. For the adaptation of the policy, the partial rollouts, i.e. the obtained triples of state, action and reward for each sequence element, are used.

Similar as with respect to step c.), it is possible to carry out step d.) only after completion of the previous method step, i.e. of step c.) in this case. Alternatively, it is also possible with respect to step d.) to already carry out this step during step c.), i.e. to for example adapt the policy directly each time a new triple of state, action and reward is obtained.

The adaptive policy is preferably represented by an artificial neural network. The artificial neural network can particularly be a deep neural network, i.e. a neural network having one or several hidden layers.

In order to enable scalability to large numbers of observations, i.e. to large numbers of data to process, the adaptive policy preferably comprises at least a convolutional neural network or is even formed by a convolutional neural network. The use of a convolutional neural network allows usage of the available computation infrastructure for large data in a particular efficient way.

For adapting the adaptive policy, any reinforcement learning method can be applied. A large variety of reinforcement learning algorithms suited for this purpose are known to the skilled person. Particularly well suited and preferred, however, is a reinforcement learning algorithm that is based on Q-learning, or on a policy gradient method or on an actor-critic algorithm.

The input data stream preferably relates to finance-related data, such as in particular tick data, quote data, trade data and/or limit order book data. In this case, the decisions to be performed by the policy can for example be buy-and/or sell-recommendations for certain assets. The input data stream can, however, also relate to data from e-commerce, such as in particular click-through data, and/or to data from Internet of Things (IOT) sensors. There is a large variety of further data types that are well suited for being processed by means of the reinforcement learning method according to the invention.

The differential memory advantageously has a write-function $f_{write}$ that is adaptive, e.g. by means of an artificial neural network, and that is preferably trained end-to-end with the reinforcement learning algorithm. Additionally, or alternatively, the differential memory has a read-function $f_{read}$ that is adaptive, e.g. by means of an artificial neural network, and that is preferably trained end-to-end with the reinforcement learning algorithm. Thus, the rollouts, i.e. the obtained triples of state, action and reward for each sequence element, are preferably used not only to adapt the policy, but also to adapt the write-function $f_{write}$ and/or the read-function $f_{read}$ of the differential memory.

In a preferred embodiment which is particularly well suited for processing finance-related data, the differential memory has a write-function $f_{write}$ according to which the representation of each tuple of action and next state is stored by means of calculating a weighted linear combination based on the tuple of which a representation is to be stored and on a representation that has already been stored in the memory previously. The weights of the weighted linear combination are preferably trained end-to-end with the reinforcement learning algorithm, i.e. the rollouts are also used to adapt the weights of the weighted linear combination.

In a particularly preferred embodiment, the method steps a.) - d.) are carried out in parallel for all subsequences $p_t$. In other words, the method steps a.) - d.) are preferably carried out temporally at the same time or at least in a temporally overlapping way for the different subsequences. Due to the usage of a memory, such a parallel processing is even possible. With a parallel processing, it is possible to deal in an efficient way with large amounts of data. Thus, the available computing resources can be used optimally.

If the data of the input data stream are event-based data, it is preferred that in method step a0.), the sequence elements are regularized to the same pre-defined number n of encoded sequence elements for each subsequence $p_t$ by means of a recurrent neural network, in order to facilitate the parallel processing by means of the adaptive policy. Recurrent neural networks are particularly well suited to process event-based, i.e. not regularly clocked, data. By means of regularizing such an event-based data stream to the same pre-defined number $n$ of encoded sequence elements for each subsequence $p_t$, a regularly clocked sequence of encoded sequence elements can be obtained, which is generally better suited for further parallel processing. The recurrent neural network is advantageously formed by a long short-term memory (LSTM) or by a gated recurrent unit (GRU).

The encoded sequence elements of all subsequences are preferably concatenated for further processing by means of the policy. In a particularly advantageous embodiment, the adaptive policy in this case comprises a convolutional neural network or is formed by a convolutional neural network. The convolutional neural network can then generate an action for each encoded sequence element of each subsequence $p_t$ in method step b.). It is the particular advantage of convolutional neural networks that they scale to large amounts of data. By regularizing the input data stream by means of a recurrent neural network and feeding the output thereof to a convolutional neural network, the advantage of recurrent neural networks to process event-based data series is combined with the advantage of scalability of convolutional neural networks. As a result, a highly efficient processing of large amounts of event-based data becomes possible.

It is particularly noted that such a regularization and encoding of an event-based data stream by means of a recurrent neural network, in order to enable a further processing by means of a convolutional network, is not only suited to be used in combination with the above mentioned reinforcement learning method for training a policy to perform recommendations and/or sequential decisions, but can be used independently thereof and for other purposes. The method for regularizing, encoding and processing an event-based data stream as presented above can be regarded as a further independent invention.

Thus, as a further invention, a method for regularizing, encoding and processing an event-based data stream is provided, which in particular can, but does not have to, be used in a reinforcement learning method as presented above. The regularizing method comprises at least the steps of

- partitioning the data stream into a plurality of subsequences having the same time intervals and having *ni* sequence elements;
- regularizing the sequence elements to the same pre-defined number *n* of encoded sequence elements for each subsequence by means of a recurrent neural network, in particular a long short-term memory (LSTM) or a gated recurrent unit (GRU);
- concatenating all encoded sequence elements of the plurality of subsequences; and
- processing the concatenated encoded sequence elements of the plurality of subsequences by means of a convolutional neural network.

Furthermore, a computer program product directly loadable into the internal memory of a digital computer is provided. The computer program product comprises software code portions for performing the method steps as described above, when said product is run on a computer. Thus, the software code portions of the computer program product is adapted, when being run on a computer, to carry out the above mentioned reinforcement learning method for training a policy to perform recommendations and/or sequential decisions by learning from an input data stream and/or to carry out the above mentioned method for regularizing, encoding and processing an event-based data stream. The computer program product is preferably stored on a storage device readable by a computer. The computer program product thus comprises executable instructions to carry out one or a plurality of the methods as indicated. Preferably, a non-transitory computer-readable medium is provided comprising the computer program for carrying out one or several of the methods as indicated.

Thus, the computer program is adapted to carry out central parts of at least one of the methods as described above when executed in a processor of a computer. Preferably, a computer program product is provided that can be loaded directly into the internal memory of a digital computer and comprises software segments which cause one of the above-mentioned methods to be carried out, when the product is running on a computer.

The computer program can be realized as a computer program code element which comprises computer-implemented instructions to cause a processor to carry out a respective method. It can be provided in any suitable form, including source code or object code. In particular, it can be stored on a computer-readable medium or embodied in a data stream. The data stream may be accessible through a network such as the Internet.

SHORT DESCRIPTION OF THE FIGURES

Preferred embodiments of the invention are described in the following with reference to the drawings, which only serve for illustration purposes, but have no limiting effects. In the drawings it is shown:

Fig. 1   a schematic diagram illustrating the reinforcement learning method for training a policy to perform recommendations and/or sequential decisions using a differential memory according to an inventive embodiment;

Fig. 2   a schematic diagram illustrating the method for regularizing, encoding and processing an event-based data stream by means of a recurrent neural network and a convolutional neural network according to an inventive embodiment; and

Fig. 3   a schematic diagram of a particularly preferred embodiment of a convolutional neural network for carrying out the method of Fig. 2.

## DESCRIPTION OF PREFERRED EMBODIMENTS

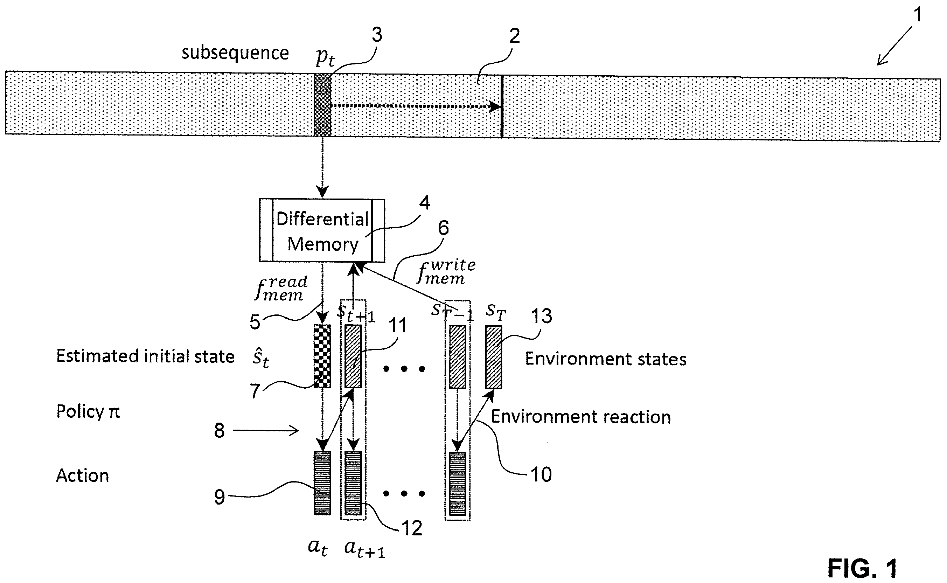

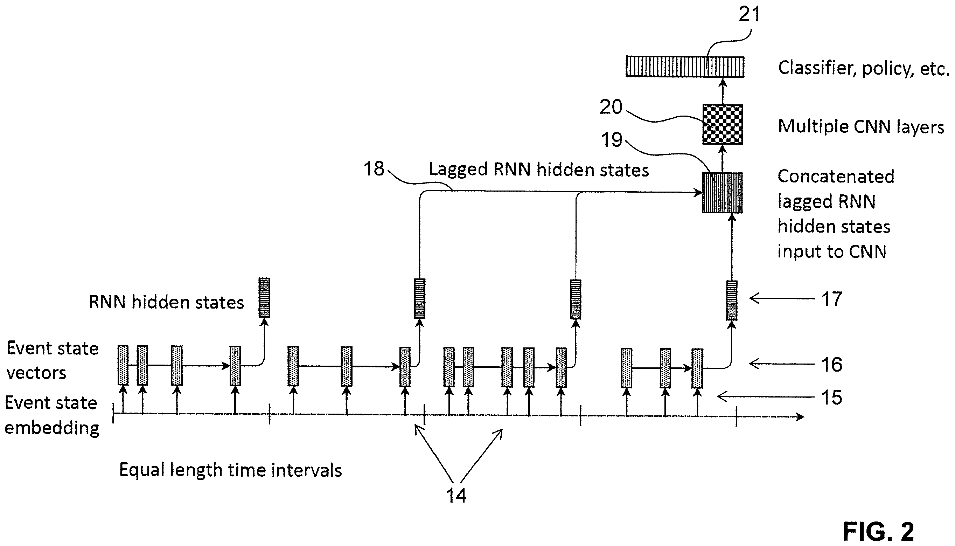

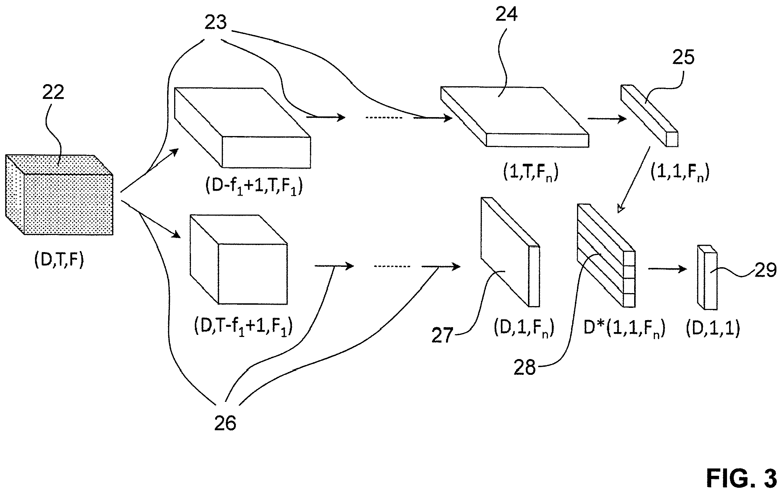

In the following and with particular reference to Figure 1, a preferred embodiment of the inventive reinforcement learning method for training a policy to perform recommendations and/or sequential decisions is indicated. Figure 2 illustrates a preferred inventive embodiment of the method for regularizing, encoding and processing an event-based data stream, which can particularly be used in combination with the method as illustrated in Figure 1. Figure 3 shows an advantageous and preferred embodiment of a convolutional neural network for use in combination with the method as illustrated in Figure 2 and, thus, also with the method as illustrated in Figure 1.

Figure 1 shows a reinforcement learning method for training a policy 8 to perform recommendations and/or sequential decisions by learning from an input data stream 1. The input data stream 1 can particularly relate to an event-based data stream of finance-related data, data from e-commerce or to data from Internet of Things sensors.

A differential memory 4 is used to keep track of the agent's policy 8 and to enable parallel mini-batch learning. Parallelizing the learning process can be used to scale reinforcement learning to large industrial problems with massive amounts of data received by the input data stream 1.

In a first step, the input data stream 1 is partitioned into a plurality of subsequences 2 with sequence elements 3.

The method illustrated in Figure 1 is particularly well suited to be used for long episodes which originate from long subsequences 2 of a long input data stream 1. Each sequence element $p_t$ (3) represents partially the environment state $s_t$ at time step $t$. This partial state $p_t$, together with the time $t$ or time index is fed to the differential neural memory 4. The differential neural memory 4 serves for a reconstructive process, in order to store knowledge, and allows reassembling experiences from this stored knowledge. The read- and write-functions of the differential neural memory 4 can be indicated in terms of two functions $f_{read}$ (5) and $f_{write}$ (6), one that allows storing data and one that allows querying data from the memory 4. The output of the differential neural memory 4 is an initial state approximation $\hat{s}_t$ (7):

$$\hat{s}_t = f_{read}(t, p_t)$$

From this initial state approximation 7, the first action 9 is generated from the actual policy $\pi$ (8), which represents the agent's decision making process:

$$a_t = \pi(\hat{s}_t)$$

Here, the policy 8 can be an arbitrary deep neural network, which transforms a state 7, 11 into a deterministic or random action 9, 12, as required by the reinforcement learning algorithm. The precise form of the policy 8 is problem specific and can vary according to the application. The environment responds by a reaction 10 with a reward $r_t$ and a next state $s_{t+1}$ (11). The next action 12 is now obtained from the true environment response $s_{t+1}$ (11):

$$a_{t+1} = \pi(s_{t+1})$$

A representation of the tuple of the next action 12 and the next state 11 ($a_{t+1}$; $s_{t+1}$) is stored back to the differential neural memory 4 for later retrieval. This process then iteratively continues for all sequence elements 3 until the end of the subsequence 2 and until the last state $s_T$ (13) is obtained. In doing so, a partial episode is obtained which is a sequence of states 7, 11, actions 9, 12 and rewards:

$$\hat{s}_t, a_t, r_t, s_{t+1}, a_{t+1}, r_{t+1}, s_{t+2}, \dots, r_{T-1}, s_T$$

Thus, the differential memory 4 is queried once at the beginning of each subsequence 2 and then updated at every subsequent step, i.e. for each subsequent sequence element 3. The read and write functions $f_{read}$ (5) and $f_{write}$ (6) of the differential memory 4 is trained end-to-end with a reinforcement learning optimization target such as to optimize the agent's reward.

Each triple of state 7, 11, action 9, 12 and reward forms a partial rollout which is used to adapt the policy 8 and the read and write functions $f_{read}$ (5) and $f_{write}$ (6). For this purpose, an appropriate reinforcement learning algorithm for episodic problems can be used, such as Q-learning, policy gradient, actor critic etc.

The method as illustrated in Figure 1 allows breaking up a long input data stream 1 into pieces, i.e. the subsequences 2, which then can be parallelized and calculated independently. The rollouts then can be used in episodic reinforcement learning algorithms to estimate e.g. the Q-value function or update policy gradients. The overall algorithm of the method as shown in Figure 1 works as follows:

(i) Initialize the differential neural memory 4.
(ii) Sample $N$ non-overlapping windows [$t_i$; $t_{i+n}$] of the input data stream 1, in order to obtain subsequences 2 of length $n$ (usually $n$ is fixed but it can also vary for different subsequences 2).
(iii) Process the $N$ subsequences 2 in parallel. This requires $nN$ policy network evaluations, which can be calculated in a data parallel manner.
(iv) Use the result of the $N$ obtained rollouts to update e.g. the gradient of the policy 8 or the Q-function, as required by the applied reinforcement learning algorithm.
(v) Repeat from step (ii).

The implementation of the policy 8 is problem specific and depends on the action type. For discrete actions, a softmax layer can be used to output the action probabilities. For continuous actions, the policy 8 can output a distribution on the action space, which can particularly be modeled as a Gaussian distribution.

The implementation of the differential memory 4 is also problem specific. For example, an array of elements for each time step can be used and the function $f_{read}$ (5) updates the memory with a weighted linear combination, with learnable weights. The idea is to deviate only slowly from the initial elements stored by the differential memory 4. The benefit of using a general differential neural memory is a better generalization and a compression as it is not necessary to store a complete element at each time step.

In the following, a concrete example to optimize the weights of the policy 8 is discussed with increasing sophistication of the architecture of the differential neural memory 4. The action 9, 12 at time $t$ in this case are the policy weights $a_t$ which are used to go from time $t$ to $t + 1$. The partial state, i.e. the subsequence $p_t$ (3) at time $t$ is the historic price and market data in the time interval [$t - dt$; $t$] with $dt$ a few days. Different possible architectures for the differential memory 4 are considered:

(i) An array which simply stores the portfolio weights at each time step, i.e. a non-inventive reinforcement learning method according to the state of the art. The array is initialized randomly or with plausible values, such as equal proportions. The read and write function $f_{read}$ (5) and $f_{write}$ (6) are the identity, which means it is just read from the array and the portfolio weights are replaced. The initial state $\hat{s}_t = \left(p_t, a_{t-1}^{stored}\right)$ consists of the partial state $p_t$, which is all the market data, and the portfolio weight $a_{t-1}^{stored}$ that is read from the memory and comes from initialized values or a previous rollout. The policy $\pi$ now produces the new action $a_t = \pi\left(p_t, a_{t-1}^{stored}\right),$ which is written to the array at time $t$ and replaces the respective values stored there. The next time step produces $a_{t+1} = \pi(p_{t+1}, a_t)$, where $a_t$ is the action just created. This continues to the end of the subsequence 2.
(ii) The next more sophisticated architecture of a different neural memory 4 has a learnable write function $f_{read}$ (5), which instead of just writes back the actions to the array, it updates the memory with a weighted linear combination $\omega a_t^{stored} + (1 - \omega)a_t^{new}.$ Such an architecture is different from the state of the art and, by using a write function $f_{read}$ (5) that does not correspond to the identity function, is adapted to carry out an inventive method.
(iii) The full generalization uses learnable read and write functions $f_{read}$ (5) and $f_{write}$ (6) of a differential neural memory architecture, which itself are deep neural networks.

The choice of the reinforcement learning algorithm is again problem specific. For noisy time series of the input data stream 1, a simple gradient based optimizer already shows good performance. Another good choice are trust region policy gradient algorithms and proximal policy optimization.

The choice of the sampling procedure to generate the non-overlapping windows [$t_i$; $t_{i+n}$] of the input data stream 1, in order to obtain subsequences 2, allows generating new types of algorithms, which can incorporate new data to perform online learning and can reduce the catastrophic forgetting. Possible preferred choices are:

(i) Sample the windows [$t_i$; $t_{i+n}$] uniformly over the input data stream 1, i.e. the whole historical data set.
(ii) Sample the windows from a prior distribution over the whole historical data set. This allows giving higher importance to some historical data. Sampling this data more often reduces the likelihood of forgetting it.

(iii)Learn an attention distribution, which gives to each data point an importance probability that is learned as part of the overall training process.

(iv)Combine the prior sampling with attention, by using a convex combination of the two distributions. This again helps to reduce forgetting important data. The weight factor for the convex combination can be a fixed meta parameter or a trainable parameter.

After an initial training using historical data, the training mode can be changed to online learning, where new data is constantly arriving and is used to adjust the policy 8 and the differential memory 4 accordingly. The new data can be updated to the differential memory 4 in a batched mode (data is added only hourly or daily), or it can also be updated immediately, i.e. in a streaming mode. Different choices for modifying the window sampling for online learning are:

(i) Sample from a distribution which is biased to give windows $[t_i; t_{i+n}]$ covering new data a higher probability. This allows the policy 8 to adjust to a new regime.

(ii) Extend the attention distribution with a prior over the new data and then learn the attention probabilities for the new data.

(iii)Any combination of (i) and (ii).

Figure 2 illustrates a method for regularizing, encoding and processing an event-based data stream. The data stream can particularly be the stream of states 7, 11, 13 shown in Figure 1, if the input data stream 1 is an event-based data stream. Thus, the method illustrated in Figure 2 can be, but does not necessarily have to be used in combination with the method as illustrated in Figure 1. The method of Figure 2 can particularly be used for event data such as quotes, trades and limit order book data. In case of a deterministic policy 8, the portfolio weights can be obtained from a softmax layer. If a stochastic policy 8 is needed, the output of the softmax layer can be used as the mean of a Gaussian distribution on the $d$-dimensional simplex $\Delta^{d+1} \subset \mathbb{R}^{d+1}$. To construct this Gaussian distribution, the Hilbert space structure on $\Delta^{d+1}$, as introduced in "John Aitchison, The statistical analysis of compositional data, Chapman and Hall, 1986", can be used. The centralized log ratio transform then provides an isometry from the open simplex to $\mathbb{R}^d$, which can use to pull back the normal distribution in Euclidean space to the open d-dimensional simplex.

According to Figure 2, a combination of a recurrent neural network and a specific convolutional neural network is used, which can be implemented for parallel mini-batch processing and scales to extremely large numbers of observations. The method applying the recurrent and the convolutional neural network as shown in Figure 2 can also be applied independently and can be combined with other methods as the one shown in Figure 1.

Given a sequence of event data, an embedding state embedding 15 is used to transform the data arriving at irregular time steps as event state vectors 16. These vectors are then pushed through a recurrent neural network cell (preferably an LSTM or GRU cell) to obtain a nonlinear encoding of all the event data within an equal length time interval 14. The length of the time intervals 14 is selected to have a desired average number of observations per interval. At a given time point (end point of an interval) a recurrent neural network hidden state 17 is created by combining multiple nonlinear encoding vectors. This state matrix is then concatenated with state matrices of other time intervals 14 to a concatenated matrix with multiple layers and then processed with multiple convolutional neural network layers 20, as indicated by reference numerals 18 (lagged recurrent neural network hidden states) and 19 (concatenated lagged recurrent neural network hidden states input to convolutional neural network). The multiple convolutional neural network layers 20 represent the policy 8 as shown in Figure 1. The output of the multiple convolutional neural network layers 20 can be stored and further used as a classifier, policy, etc. (21).

The processing of the different non-overlapping equal length time intervals 14 by means of the recurrent neural network is fully independent and can be parallelized. Also the higher level multiple convolutional neural network layers 20 allow for a very efficient implementation, which allows to process massive amounts of data and very long time series efficiently. In order to achieve good performance and scalability and good generalization, the equal length time interval 14 is preferably chosen to have in average around 50 events per interval. The number of lags to go into the convolutional neural network architecture can be several thousands or more.

Figure 3 schematically depicts a preferred method with One-Dimensional Convolutions and Attention for implementing the multiple convolutional neural network layers 20 as shown in Figure 2. For time series application a special convolutional neural network structure based on two one-dimensional convolutions and an attention mechanism is well suited to capture dependency over time and across multiple series. The input is a full tensor 22 of dimensionality (D; T; F). There, T denotes the number of lags, e.g. coming from a recurrent neural network aggregation module as described above with reference to Figure 2, F the number of features and D the number of time series. In the top row of Figure 3, multiple one-dimensional convolutions 23 in the time series dimension D reduce all the time series to one, resulting in a tensor 24 of dimensionality (1; T; $F_n$). This tensor 24 is aggregated with an attention distribution over time to a tensor 25 of dimensionality (1; 1; $F_n$). In the second row, multiple dilated convolutional layers carry out one-dimensional convolutions 26 in the time interval (lags) dimensions, in order to extract features over time, resulting in a tensor 27 of dimensionality (D; 1; Fn). The filter banks depend on additional features of the D rows, so that time series with the same attribute share the same filter coefficients. The final step is to combine D stacked tensors 28 from the first row with the time aggregated feature maps to the final output tensor 29 of dimensionality (D; 1; 1). Dropout and pooling layers can be added as needed to further improve the robustness of the model.

In a particularly preferred example relating to financial data, the input data are bid, bid size, ask, and ask size tick prices, arriving with milliseconds or nanoseconds time stamps. Every event is therefore a vector of 4 values. For a liquid asset which is traded intensively, the equal length time intervals 14 can e.g. have a duration of one second. Within such a time interval of one second a varying number of up to hundreds of events can be contained. All the tick vectors falling within a one second interval are encoded with e.g. an LSTM cell into a higher dimensional vector of dimension d = 128. Preferably for each second equal length time interval 14, a d-dimensional vector is produced. At every second, the previous 3600 seconds are observed, and the 3600 d-dimensional vector is concatenated to a (3600 x d) - dimensional matrix which then serves as input to the multiple convolutional neural network layers 20 as described above with two one-dimensional convolutions and attention, which outputs a classifier or a policy 21.

REFERENCE NUMERALS

| 1 | Input data stream | | hidden states input to CNN |
|---|---|---|---|
| 2 | Subsequence | 20 | Multiple CNN layers |
| 3 | Sequence element | 21 | Classifier, policy, etc. |
| 4 | Differential memory | 22 | Full tensor |
| 5 | Read-function | 23 | One-dimensional convolutions in the time series dimension |
| 6 | Write function | | |
| 7 | Initial state approximation | | |
| 8 | Policy | 24 | Tensor reduced in the time series dimension |
| 9 | Action | | |
| 10 | Reaction | 25 | Tensor reduced in the time series and the time interval (lags) dimension |
| 11 | Next state | | |
| 12 | Next action | | |
| 13 | Last state | 26 | One-dimensional convolutions in the time interval (lags) dimension |
| 14 | Equal length time intervals | | |
| 15 | Event state embedding | | |
| 16 | Event state vectors | 27 | Tensor reduced in the time interval (lags) dimension |
| 17 | RNN hidden states | | |
| 18 | Lagged RNN hidden states | 28 | D stacked tensors |
| 19 | Concatenated lagged RNN | 29 | Final output tensor |

**Claims**

1. A reinforcement learning method for training a policy (8) to perform recommendations and/or sequential decisions by learning from an input data stream (1),

   wherein the method comprises the step:

   a0.) partitioning the input data stream (1) into a plurality of subsequences $p_t$ (2) with $ni$ sequence elements (3) and with $t = t_i, ..., t_{i+ni}$;

   and wherein for each of these subsequences $p_t$ (2) the following steps are carried out:

   a.) determining an initial state approximation $s_{t_i}$ (7) at time $t_i$ by querying a memory (4);
   b.) generating a partial rollout comprising a triple of state (7; 11), action (9; 12) and reward for each sequence element (3), starting with the initial state approximation $s_{t_i}$ (7) and iteratively applying an adaptive policy (8) to generate an action $a_{t_i}$ (9; 12), in order to reveal a next state (11) and a reward;
   c.) storing a representation of each obtained tuple of action (9; 12) and next state (12) in the memory (4), in order to improve further initial state approximations (7); and

d.) using the partial rollouts to adapt the adaptive policy (8) by means of a reinforcement learning algorithm;

**characterized in that**
the memory is a differential memory (4) in which a write-function $f_{write}$ (6) being different from the identity function is applied for storing and/or in which a read-function $f_{read}$ (5) being different from the identity function is applied for querying.

2. The method according to claim 1, wherein the data of the input data stream (1) are event-based data.

3. The method according to claim 1 or 2, wherein the adaptive policy (8) is represented by a deep artificial neural network.

4. The method according to claim 3, wherein the adaptive policy (8) comprises a convolutional neural network.

5. The method as claimed in one of the preceding claims, wherein the method steps a.) - d.) are carried out in parallel for all subsequences $p_t$ (2).

6. The method according to claim 5, wherein the data of the input data stream (1) are event-based data, and wherein in method step a0.), the sequence elements (3) are regularized to the same pre-defined number n of encoded sequence elements (17) for each subsequence $p_t$ (2) by means of a recurrent neural network, in particular a long short-term memory (LSTM) or a gated recurrent unit (GRU), in order to facilitate the parallel processing by means of the adaptive policy (8).

7. The method according to claim 6, wherein the encoded sequence elements (17) of all subsequences (2) are concatenated, in order to generate an action (12) for each encoded sequence element (17) of each subsequence $p_t$ (2) in method step b.) by means of the adaptive policy (8) comprising a convolutional neural network (20).

8. The method as claimed in one of the preceding claims, wherein the algorithm for adapting the adaptive policy (8) is based on Q-learning, or on a policy gradient method or on an actor-critic algorithm.

9. The method as claimed in one of the preceding claims, wherein the input data stream (1) relates to finance-related data, such as in particular tick data, quote data, trade data and/or limit order book data, to data from e-commerce, such as in particular click-through data, and/or to data from Internet of Things sensors.

10. The method as claimed in one of the preceding claims, wherein the differential memory (4) has a write-function $f_{write}$ (6) that is adaptive and that is preferably trained end-to-end with the reinforcement learning algorithm, and/or wherein the differential memory has a read-function $f_{read}$ (5) that is adaptive and that is preferably trained end-to-end with the reinforcement learning algorithm.

11. The method as claimed in one of the preceding claims, wherein the differential memory (4) has a write-function $f_{write}$ (6) according to which the representation of each tuple of action (9; 12) and next state (11) is stored by means of calculating a weighted linear combination based on the tuple of which a representation is to be stored and on a representation that has already been stored in the memory (4) previously, and wherein the weights of the weighted linear combination are preferably trained end-to-end with the reinforcement learning algorithm.

12. The method as claimed in one of the preceding claims, wherein the differential memory (4) comprises an artificial neural network, in particular a deep artificial neural network, for realizing the write-function $f_{write}$ and/or the read-function $f_{read}$.

13. A method for regularizing, encoding and processing an event-based data stream (1), in particular to be used in a reinforcement learning method as claimed in one of the preceding claims, comprising at least the steps of

- partitioning the data stream (1) into a plurality of subsequences (2) having equal time intervals (14) and having $ni$ sequence elements (3);
- regularizing the sequence elements (3) to the same pre-defined number $n$ of encoded sequence elements (17) for each subsequence (2) by means of a recurrent neural network, in particular a long short-term memory (LSTM) or a gated recurrent unit (GRU);
- concatenating all encoded sequence elements (17) of the plurality of subsequences (2); and
- processing the concatenated encoded sequence elements (19) of the plurality of subsequences (2) by means of a convolutional neural network (20).

14. Computer program product directly loadable into the internal memory of a digital computer, comprising software code portions for performing the steps of one of the preceding claims, when said product is run on a computer.

FIG. 1

FIG. 2

EP 3 543 918 A1

**FIG. 3**

Europäisches
Patentamt

European
Patent Office

Office européen
des brevets

# EUROPEAN SEARCH REPORT

Application Number

EP 18 16 2901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXANDER PRITZEL ET AL: "Neural Episodic Control", ARXIV.ORG, CORNELL UNIVERSITY LIBRARY, 201 OLIN LIBRARY CORNELL UNIVERSITY ITHACA, NY 14853, 6 March 2017 (2017-03-06), XP080754643, | 1-5, 8-12,14 | INV. G06N3/08 G06N5/04 G06N3/04 |
| Y | * abstract; figures 1,2 * * page 2, left-hand column, line 1 - right-hand column, last line * * page 3, left-hand column, line 1 - page 4, right-hand column, line 12 * | 6,7 | |
| X | KEREN GIL ET AL: "Convolutional RNN: An enhanced model for extracting features from sequential data", 2016 INTERNATIONAL JOINT CONFERENCE ON NEURAL NETWORKS (IJCNN), IEEE, 24 July 2016 (2016-07-24), pages 3412-3419, XP032992602, DOI: 10.1109/IJCNN.2016.7727636 [retrieved on 2016-10-31] | 13 | |
| Y | * abstract; figure 1b * * page 3412, left-hand column, line 1 - page 3413, left-hand column, line 14 * * page 3413, right-hand column, line 1 - page 3415, left-hand column, last line * | 6,7 | TECHNICAL FIELDS SEARCHED (IPC) G06N |
| A,D | Zhengyao Jiang ET AL: "A Deep Reinforcement Learning Framework for the Financial Portfolio Management Problem", , 16 July 2017 (2017-07-16), XP055504754, Retrieved from the Internet: URL:https://arxiv.org/pdf/1706.10059.pdf [retrieved on 2018-09-05] * section 2.1 * * section 2.2 * | 9 | |

-/--

The present search report has been drawn up for all claims

| Place of search | Date of completion of the search | Examiner |
|---|---|---|
| The Hague | 13 September 2018 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 16 2901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Jane X Wang ET AL: "Learning to reinforcement learn", , 17 November 2016 (2016-11-17), XP055504066, Retrieved from the Internet: URL:https://arxiv.org/pdf/1611.05763.pdf [retrieved on 2018-09-05] * section 2.2 * * section 2.3 * ----- | 1-14 | |
| T | Samuel Ritter ET AL: "Episodic Control as Meta-Reinforcement Learning", bioRxiv, 3 July 2018 (2018-07-03), XP055504793, DOI: 10.1101/360537 Retrieved from the Internet: URL:https://www.biorxiv.org/content/biorxiv/early/2018/07/06/360537.full.pdf [retrieved on 2018-09-05] * abstract; figures 1,2 * * section "Introduction" * * section "Model" * ----- | 1-14 | |

TECHNICAL FIELDS
SEARCHED     (IPC)

The present search report has been drawn up for all claims

| Place of search | Date of completion of the search | Examiner |
|---|---|---|
| The Hague | 13 September 2018 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 543 918 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RICHARD S SUTTON ; ANDREW G BARTO.** Reinforcement learning: An introduction. MIT press Cambridge, 1998, vol. 1
- **DIMITRI P. BERTSEKAS.** Dynamic Programming & Optimal Control. 2005, vol. I
- **VOLODYMYR MNIH ; KORAY KAVUKCUOGLU ; DAVID SILVER ; ANDREI A RUSU ; JOEL VENESS ; MARC G BELLEMARE ; ALEX GRAVES ; MARTIN RIEDMILLER ; ANDREAS K FIDJELAND ; GEORG OSTROVSKI et al.** Human-level control through deep reinforcement learning. *Nature,* 2015, vol. 518 (7540), 529-533
- **DAVID SILVER ; AJA HUANG ; CHRIS J MADDISON ; ARTHUR GUEZ ; LAURENT SIFRE ; GEORGE VAN DEN DRIESSCHE ; JULIAN SCHRITTWIESER ; IOANNIS ANTONOGLOU ; VEDA PANNEERSHELVAM ; MARC LANCTOT et al.** Mastering the game of go with deep neural networks and tree search. *Nature,* 2016, vol. 529 (7587), 484-489

- **DAVID SILVER ; JULIAN SCHRITTWIESER ; KAREN SIMONYAN ; IOANNIS ANTONOGLOU ; AJA HUANG ; ARTHUR GUEZ ; THOMAS HUBERT ; LUCAS BAKER ; MATTHEW LAI ; ADRIAN BOLTON et al.** Mastering the game of go without human knowledge. *Nature,* 2017, vol. 550 (7676), 354-359
- **KAI ARULKUMARAN ; MARC PETER DEISENROTH ; MILES BRUNDAGE ; ANIL ANTHONY BHARATH.** A brief survey of deep reinforcement learning. *IEEE Signal Processing Magazine,* November 2017, vol. 34 (6), 26-38
- **ZHENGYAO JIANG ; DIXING XU ; JINJUN LIANG.** *A deep reinforcement learning framework for the financial portfolio management problem,* 2017
- **JOHN AITCHISON.** The statistical analysis of compositional data. Chapman and Hall, 1986